# EUROPEAN PATENT APPLICATION

(11) **EP 4 753 053 A1**
(43) Date of publication of application: **03.06.2026**
(21) Application number: 24853214.5
(22) Date of filing: 08.04.2024
(51) Int. Cl.: H01M 50/367

(54) **BATTERY CELL, BATTERY, AND ELECTRIC DEVICE**

(30) Priority: 16.08.2023 CN 202311034115
(71) Applicant: Contemporary Amperex Technology Co., Limited, Ningde, Fujian 352100 (CN)
(72) Inventor: YANG, Daowei, Ningde, Fujian 352100 (CN); KE, Haibo, Ningde, Fujian 352100 (CN); YAN, Xiaojie, Ningde, Fujian 352100 (CN); LI, Quankun, Ningde, Fujian 352100 (CN); XING, Chengyou, Ningde, Fujian 352100 (CN)
(74) Representative: Ran, Handong
(86) International application number: PCT/CN2024/086673
(87) International publication number: WO 2025/035798

(57) **Abstract**

Embodiments of the present application provide a battery cell, a battery, and an electric device. The battery cell comprises: a casing, wherein the casing has a first wall, and the first wall is provided with a pressure relief mechanism; an electrode assembly, accommodated in the casing; and a support structure, arranged between the electrode assembly and the first wall and fixedly connected to the first wall, wherein the support structure is used for forming an exhaust channel communicated with the pressure relief mechanism between the first wall and the electrode assembly. According to the battery cell, the battery, and the electric device in the embodiments of the present application, the possibility of non-directional pressure relief of the battery cell can be reduced.

## Description

### CROSS-REFERENCE TO RELATED APPLICATIONS

The present application claims priority to Chinese Patent Application No. 202311034115.8, entitled "BATTERY CELL, BATTERY, AND POWER CONSUMING APPARATUS" and filed on August 16, 2023, which is incorporated herein by reference in its entirety.

### TECHNICAL FIELD

The present application relates to the field of battery technologies, and in particular, to a battery cell, a battery, and a power consuming apparatus.

### BACKGROUND

In the related art, when thermal runaway occurs in a battery cell, an electrode assembly has a risk of moving toward a first wall of a housing that is provided with a pressure relief mechanism, and consequently, the electrode assembly abuts against the first wall, blocking a channel through which thermal runaway gas is vented out from the pressure relief mechanism. Consequently, a non-directional pressure relief phenomenon exists inside the battery cell.

### SUMMARY

In view of this, embodiments of the present application provide a battery cell, a battery, and a power consuming apparatus, to reduce a probability that non-directional pressure relief occurs in the battery cell.

According to a first aspect, a battery cell is provided, including: a housing, including a first wall, where the first wall is provided with a pressure relief mechanism; an electrode assembly, accommodated in the housing; and a support structure, disposed between the electrode assembly and the first wall and fixedly connected to the first wall, where the support structure is used for forming, between the first wall and the electrode assembly, an exhaust channel in communication with the pressure relief mechanism.

In this embodiment, the support structure is disposed between the first wall provided with the pressure relief mechanism and the electrode assembly, and the support structure is fixed on the first wall, to form, between the first wall and the electrode assembly, the exhaust channel in communication with the pressure relief mechanism. When thermal runaway occurs in the battery cell, thermal runaway gas can be vented to the outside of the battery cell in a timely manner through the pressure relief mechanism, thereby reducing a possibility that non-directional pressure relief occurs in the battery cell.

In a possible implementation, the support structure is used for supporting the electrode assembly.

In this embodiment, the support structure is used for supporting the electrode assembly, so that when the thermal runaway occurs in the battery cell, the exhaust channel in communication with the pressure relief mechanism can still be formed between the first wall and the electrode assembly, thereby improving the problem that the non-directional pressure relief occurs in the battery cell.

In a possible implementation, a melting point of the support structure is higher than 100°C.

In this embodiment, the support structure whose melting point is higher than 100°C is used, which helps the battery cell not be easily melted when the thermal runaway occurs. Further, the exhaust channel in communication with the pressure relief mechanism can be formed between the first wall and the electrode assembly, so that the thermal runaway gas can be vented to the outside of the battery cell through the pressure relief mechanism in a timely manner, thereby improving the problem that the non-directional pressure relief occurs in the battery cell.

In a possible implementation, the battery cell further includes an insulating member, disposed between the electrode assembly and the first wall, where the insulating member is provided with an avoidance cavity, and the avoidance cavity is configured to accommodate the support structure.

In this embodiment, the avoidance cavity is provided on the insulating member to accommodate the support structure, so that when insulation between the first wall and the electrode assembly is not affected, a space of the battery cell does not need to be additionally occupied in the thickness direction of the first wall, thereby improving energy density of the battery cell.

In a possible implementation, the battery cell further includes the insulating member, the insulating member is configured to insulate the first wall and the electrode assembly, and the melting point of the support structure is higher than a melting point of the insulating member.

In this embodiment, the melting point of the support structure is set to be higher than the melting point of the insulating member, so that in a late stage of the thermal runaway, the support structure is not easily melted, and the exhaust channel for the thermal runaway gas to reach the pressure relief mechanism can be provided, thereby reducing the probability that the non-directional pressure relief occurs in the battery cell.

In a possible implementation, the support structure is fixedly connected to the first wall in a manner of soldering.

In this embodiment, the support structure is fixedly connected to the first wall in a manner of soldering, so that binding strength between the support structure and the first wall can be strengthened.

In a possible implementation, the support structure and the first wall are integrally formed.

In this embodiment, the support structure and the first wall are integrally formed, so that the binding strength between the first wall and the support structure can be improved, shaking of the support structure inside the battery cell can be reduced, and a probability that the support structure blocks the pressure relief mechanism is reduced.

In a possible implementation, a surface of the support structure that faces the electrode assembly is provided with an insulating layer.

In this embodiment, the surface of the support structure that faces the electrode assembly is provided with the insulating layer, so that a probability that the first wall is electrically connected to the electrode assembly can be reduced.

In a possible implementation, a material of the support structure is the same as a material of the first wall.

In this embodiment, the material of the support structure is set to be the same as the material of the first wall, so that processability of fixing the support structure on the first wall can be improved.

In a possible implementation, a gap is provided between the housing and the electrode assembly in a first direction; and the support structure is provided with an empty cavity that runs through along the first direction, the empty cavity is configured to communicate the pressure relief mechanism with the gap, and the first direction is perpendicular to a thickness direction of the first wall.

In this embodiment, the support structure is provided with the empty cavity that runs through along the first direction, and the empty cavity is configured to communicate the gap with the pressure relief mechanism, to guide the thermal runaway gas accumulated in the gap to the pressure relief mechanism, thereby reducing the possibility that the thermal runaway gas accumulated in the gap cannot be vented in a timely manner and consequently the housing is burst. In addition, the empty cavity is provided in the support structure, so that an effect of reducing a weight and improving the energy density can be further implemented.

In a possible implementation, the first support structure includes a first connecting wall and at least one support wall that are connected, the first connecting wall is fixedly connected to the first wall, and the support wall is perpendicular to the first connecting wall.

In this embodiment, the support structure formed by the first connecting wall fixedly connected to the first wall and the at least one support wall perpendicular to the first connecting wall is used, so that the weight of the battery cell can be reduced, and the energy density of the battery cell can be improved.

In a possible implementation, the at least one support wall includes two support walls that are disposed opposite to each other along a second direction, the second direction is perpendicular to the thickness direction of the first wall, and the second direction is perpendicular to the first direction.

In this embodiment, the two support walls that are disposed opposite to each other along the second direction and the first connecting wall form the empty cavity that runs through along the first direction, so that support strength can be enhanced, and a venting cross-sectional area can be enlarged as much as possible, thereby improving a venting rate of the thermal runaway gas.

In a possible implementation, the two support walls are separately connected to two ends of the first connecting wall along the second direction, the support wall includes a first part that is perpendicular to the second direction and a second part that is parallel to the first connecting wall, the first part is connected to the first connecting wall, and two second parts of the two support walls are spaced apart along the second direction.

In this embodiment, the support wall not only includes the first part perpendicular to the second direction, but also includes the second part parallel to the first connecting wall, and the two second parts of the support structure are spaced apart along the second direction, which can enhance the strength of the support structure.

In a possible implementation, in the thickness direction of the first wall, a projection of the second part on the first wall is located inside a projection of the first connecting wall on the first wall.

In this embodiment, the two support walls are separately connected to two ends of the first connecting wall along the second direction, and in the thickness direction of the first wall, the projection of the second part on the first wall is located inside the projection of the first connecting wall on the first wall, so that the venting cross-sectional area of the support structure can be enlarged more effectively.

In a possible implementation, in the thickness direction of the first wall, a projection of the second part on the first wall is located outside a projection of the first connecting wall on the first wall.

In this embodiment, the two support walls are separately connected to two ends of the first connecting wall along the second direction, and in the thickness direction of the first wall, the projection of the second part on the first wall is located outside the projection of the first connecting wall on the first wall, so that manufacturability of the support structure is higher.

In a possible implementation, the support structure further includes a second connecting wall, the second connecting wall is disposed opposite to the first connecting wall along the thickness direction of the first wall, and the first connecting wall, the second connecting wall, and the two support walls are connected end to end, to form the empty cavity.

In this embodiment, the support structure is formed by the first connecting wall, the two support walls, and the second connecting wall that are connected end to end, so that the strength of the support structure can be improved, thereby improving support for the electrode assembly.

In a possible implementation, the support structure is disposed in an end region of the battery cell along the first direction.

In this embodiment, the support structure is disposed in the end region of the first wall along the first direction, so that a possibility that an end of the first wall in the first direction abuts against the electrode assembly can be reduced as much as possible. In this way, the thermal runaway gas inside the battery cell can reach the pressure relief mechanism, thereby reducing the possibility that the non-directional pressure relief occurs in the battery cell.

In a possible implementation, in the first direction, the pressure relief mechanism is disposed between the two support structures, and the first direction is perpendicular to the thickness direction of the first wall.

In this embodiment, in the first direction, the pressure relief mechanism is disposed between the two support structures, which can reduce the possibility that the end of the first wall abuts against the electrode assembly as much as possible, so that the thermal runaway gas in two side cavities of the battery cell in the first direction can be vented to the pressure relief mechanism through the corresponding support structures, thereby further reducing the possibility that the non-directional pressure relief occurs in the battery cell.

In a possible implementation, the support structure is disposed in a middle region of the end region in the second direction, the second direction is perpendicular to the thickness direction of the first wall, and the second direction is perpendicular to the first direction.

In this embodiment, the support structure is disposed in the middle region of the end region in the second direction, so that when deformation of the housing is severe, the thermal runaway gas accumulated in the side cavities of the battery cell in the first direction can be vented to the pressure relief mechanism as much as possible, thereby reducing the possibility that the non-directional pressure relief occurs in the battery cell.

In a possible implementation, the support structure is disposed in an edge region of the end region in the second direction, the second direction is perpendicular to the thickness direction of the first wall, and the second direction is perpendicular to the first direction.

In this embodiment, the support structure is disposed in the edge region of the end region in the second direction, so that when deformation of the housing is not severe, the thermal runaway gas accumulated in the side cavities of the battery cell in the first direction can be vented to the pressure relief mechanism as much as possible, thereby reducing the possibility that the non-directional pressure relief occurs in the battery cell.

In a possible implementation, in the thickness direction of the first wall, a size h of the support structure and a size c of the battery cell satisfy: 0.003≤h/c≤0.13.

In this embodiment, if h/c is less than 0.003, blocking easily occurs due to particles or plates generated due to runaway inside the battery cell, and consequently, the purpose of forming the exhaust channel cannot be achieved. However, when h/c is greater than 0.13, the energy density of the battery cell is seriously sacrificed. When h/c is set between 0.003 and 0.13, the energy density of the battery cell can be balanced and the exhaust channel can be formed between the first wall and the electrode assembly.

In a possible implementation, at least one support structure is disposed between the first wall and the electrode assembly, and in the thickness direction of the first wall, a total projection area S1 of the at least one support structure on the first wall and an area S of the first wall satisfy: 0.012<S1/S<0.26.

In this embodiment, when S1/S is less than 0.012, and when the thermal runaway occurs in the battery cell, a contact area between the support structure and the first wall is excessively small. Sufficient mechanical support cannot be provided for the electrode assembly. This may cause a case in which the internal electrode assembly shakes or overlaps with the first wall, and even further worsens a venting path. However, when S1/S is greater than 0.26, the weight of the battery cell is increased, and the energy density is sacrificed. In addition, due to occupation of the inside of the battery cell by the support structure, the free space is further reduced, which is not beneficial to directional pressure relief. S1/S is set between 0.012 and 0.26, so that the energy density of the battery cell can be balanced and the exhaust channel can be formed between the first wall and the electrode assembly.

In a possible implementation, the first wall is an end cover.

In this embodiment, the support structure and the end cover are fixed together. In comparison to fixing the support structure on another wall of the housing, the support structure and the end cover may be fixed together externally, or the support structure is directly formed when the end cover is prepared, and the support structure does not need to be extended into the housing for fixing, thereby improving preparation efficiency of the battery cell.

In a possible implementation, the battery cell further includes an electrode terminal, disposed on the first wall, where the electrode terminal is electrically connected to the electrode assembly.

In this embodiment, an electrical connection to another battery cell can be implemented through an electrical connection between the electrode terminal of the first wall and the electrode assembly, to expand a capacity of the battery.

According to a second aspect, a battery is provided, including the battery cell in the first aspect and any possible implementation of the first aspect.

According to a third aspect, a power consuming apparatus is provided, including the battery in the second aspect, where the battery is configured to supply electric energy to the power consuming apparatus.

### BRIEF DESCRIPTION OF THE DRAWINGS

To describe the technical solutions in embodiments of the present application more clearly, the following briefly describes the accompanying drawings required in the embodiments of the present application. Apparently, the accompanying drawings in the following descriptions show merely some embodiments of the present application, and a person of ordinary skill in the art may derive other drawings from these accompanying drawings without creative efforts.
FIG. 1 is a schematic diagram of a structure of a vehicle disclosed in an embodiment of the present application;
FIG. 2 is a schematic diagram of a structure of a battery disclosed in an embodiment of the present application;
FIG. 3 is an exploded schematic diagram of a battery cell disclosed in an embodiment of the present application;
FIG. 4 is a plane cross-sectional view of a battery cell disclosed in an embodiment of the present application;
FIG. 5 is a partial cross-sectional view of a battery cell disclosed in another embodiment of the present application;
FIG. 6 is a schematic diagram of a connection between a first wall and a support structure that are disclosed in an embodiment of the present application;
FIG. 7 is another plane cross-sectional view of a battery cell disclosed in an embodiment of the present application;
FIG. 8 is a schematic diagram of a structure of a support structure disclosed in an embodiment of the present application;
FIG. 9 is a schematic diagram of a structure of a support structure disclosed in another embodiment of the present application;
FIG. 10 is a schematic diagram of a structure of a support structure disclosed in still another embodiment of the present application; and

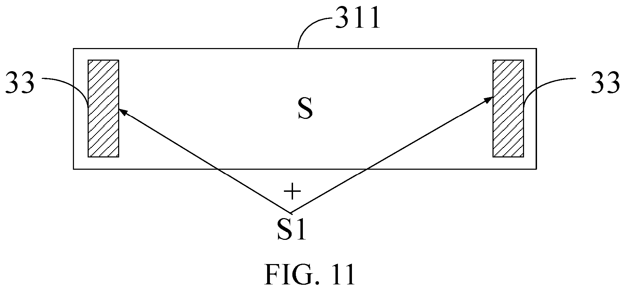

FIG. 11 is a top view of a first wall disclosed in an embodiment of the present application.

### DETAILED DESCRIPTION

To make the objectives, technical solutions, and advantages of embodiments of the present application clearer, the following clearly describes the technical solutions in embodiments of the present application with reference to the accompanying drawings in the embodiments of the present application. Apparently. the described embodiments are merely some rather than all of the embodiments of the present application. All other embodiments obtained by a person of ordinary skill in the art based on embodiments of the present application without making creative efforts shall fall within the protection scope of the present application.

Unless otherwise defined, meanings of all technical and scientific terms used in the present application are the same as those commonly understood by a person skilled in the art to which the present application belongs; and the terms used in the descriptions of the present application are merely for the purpose of describing specific embodiments, but are not intended to limit the present application. The terms "comprise" and "have" and any variations thereof in the specification and the claims of the present application as well as the descriptions of the accompanying drawings are intended to cover non-exclusive inclusion. The terms "first", "second", and the like in the specification and claims of the present application or the foregoing accompanying drawings are used to distinguish different objects, rather than to describe a specific order or primary-secondary relationship.

The azimuth words appearing in the following description are directions shown in the drawings, and do not limit the specific structure of the present application. In the descriptions of the present application, it should be noted that, unless otherwise stated, the terms "installation", "connected to", and "connected with" are to be understood broadly, and may be, for example, a fixed connection, a disassemble connection, or an integral connection; and they can be connected directly or indirectly through an intermediate medium. For a person of ordinary skill in the art, the specific meanings of the foregoing terms in the present application can be understood according to specific situations.

"Embodiment" mentioned in the present application means that specific features, structures, or characteristics described with reference to the embodiment may be included in at least one embodiment of the present application. The term appearing at different positions of the specification may not refer to the same embodiment or an independent or alternative embodiment that is mutually exclusive with another embodiment. A person skilled in the art should understand, in explicit and implicit manners, that an embodiment described in the present application may be combined with another embodiment.

The term "and/or" in the present application only describes an association relationship for describing associated objects and represents that three relationships may exist. For example, A and/or B may represent the following three cases: Only A exists, both A and B exist, and only B exists. In addition, the character "/" in the present application generally indicates an "or" relationship between the associated objects.

In the present application, "a plurality of means two or more (including two). Similarly, "a plurality of groups" means two or more groups (including two groups), and "a plurality of pieces" means two or more pieces (including two pieces).

In the embodiments of the present application, the battery cell may be a secondary battery, where the secondary battery is a battery cell whose active material can be activated for continuous use through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead storage battery. This is not limited in the embodiments of the present application.

The battery cell generally includes an electrode assembly. The electrode assembly includes a positive electrode, a negative electrode, and an isolation member. During charging and discharging of the battery cell, active ions (for example, lithium ions) are intercalated and deintercalated back and forth between the positive electrode and the negative electrode. The isolation member is disposed between the positive electrode and the negative electrode, and may serve to prevent a short circuit between the positive electrode and the negative electrode while allowing the active ions to pass through.

In some embodiments, the positive electrode may be a positive electrode plate, and the positive electrode plate may include a positive electrode current collector and a positive electrode active material layer disposed on at least one surface of the positive electrode current collector.

By way of example, the positive electrode current collector has two surfaces opposite to each other in a thickness direction of the positive electrode current collector, and the positive electrode active material is disposed on either or both of the two opposite surfaces of the positive electrode current collector.

By way of example, the positive electrode current collector may be a metal foil or a composite current collector. For example, as the metal foil, a silver-surface-processed aluminum or stainless steel, stainless steel, copper, aluminum, nickel, a carbon electrode, carbon, nickel, or titanium may be used. The composite current collector may include a polymer material substrate layer and a metal layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

By way of example, the positive electrode active material may include at least one of the following materials: a lithium-containing phosphate, a lithium transition metal oxide, and respective modified compounds thereof. However, this application is not limited to these materials, and other conventional materials that can be used as positive electrode active materials of batteries may also be used. These positive electrode active materials may be used alone or in combination of two or more. An example of the lithium-containing phosphate may include, but is not limited to, at least one of lithium iron phosphate (for example, LiFePO4 (also referred to as LFP for short)), a composite material of lithium iron phosphate and carbon, lithium manganese phosphate (for example, LiMnPO4), a composite material of lithium manganese phosphate and carbon, lithium iron manganese phosphate, and a composite material of lithium manganese iron phosphate and carbon.

In some embodiments, the negative electrode may be a negative electrode plate, and the negative electrode plate may include a negative electrode current collector.

By way of example, the negative electrode current collector may be a metal foil or a composite current collector. For example, as the metal foil, a silver-surface-processed aluminum or stainless steel, stainless steel, copper, aluminum, nickel, a carbon electrode, carbon, nickel, or titanium may be used. The composite current collector may include a polymer material substrate layer and a metal layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

By way of example, the negative electrode plate may include a negative electrode current collector and a negative electrode active material disposed on at least one surface of the negative electrode current collector.

By way of example, the negative electrode current collector has two surfaces opposite to each other in a thickness direction of the negative electrode current collector, and the negative electrode active material is disposed on either or both of the two opposite surfaces of the negative electrode current collector.

By way of example, the negative electrode active material can be a negative electrode active material well known in the art for battery cells. By way of example, the negative electrode active material may include at least one of the following materials: artificial graphite, natural graphite, soft carbon, hard carbon, a silicon-based material, a tin-based material, lithium titanate, or the like.

In some embodiments, the negative electrode can be made of foam metal. The foam metal may be foam nickel, foam copper, foam aluminum, a foam alloy, or foam carbon. When the foam metal is used as the negative electrode plate, the surface of the foam metal may not be provided with the negative electrode active material. Certainly, a negative electrode active material may also be disposed.

By way of example, the negative electrode current collector may also be filled in and/or deposited with a lithium source material, potassium metal, or sodium metal, and the lithium source material is lithium metal and/or a lithium-rich material.

In some embodiments, a material of the positive electrode current collector may be aluminum, and a material of the negative electrode current collector may be copper.

In some implementations, the electrode assembly further includes an isolation member, and the isolation member is disposed between the positive electrode and the negative electrode.

In some implementations, the isolation member is a separator. There is no particular limitation on a type of the separator in the present application, and any well-known separator with a porous structure that has good chemical stability and mechanical stability may be selected.

By way of example, a main material of the separator may be selected from at least one of glass fiber, non-woven fabric, polyethylene, polypropylene, polyvinylidene fluoride, or ceramic.

In some implementations, the isolation member is a solid-state electrolyte. The solid-state electrolyte is disposed between the positive electrode and the negative electrode, and also serves to transmit ions and isolate the positive electrode and the negative electrode.

In some implementations, the battery cell further includes an electrolyte, and the electrolyte serves to transmit ions between the positive electrode and the negative electrode. There is no specific limitation on a type of the electrolyte in the present application, and selection may be performed according to requirements. The electrolyte may be in a liquid, gel, or solid state.

In some implementations, the electrode assembly is of a winding structure. The positive electrode plate and the negative electrode plate are wound into winding structures.

In some implementations, the electrode assembly is of a laminated structure.

By way of example, a plurality of positive electrode plates and a plurality of negative electrode plates may be disposed respectively, and the plurality of positive electrode plates and the plurality of negative electrode plates are alternately stacked.

By way of example, a plurality of positive electrode plates may be disposed, and the negative electrode plates are folded into a plurality of stacked folded segments, and one positive electrode plate is sandwiched between adjacent folded segments.

By way of example, both the positive electrode plates and the negative electrode plates are folded to form a plurality of stacked folded segments.

By way of example, a plurality of isolation members may be disposed, which are respectively disposed between any adjacent positive electrode plates or negative electrode plates.

By way of example, the isolation members may be continuously disposed, and are disposed between any adjacent positive electrode plates or negative electrode plates in a manner of folding or winding.

In some implementations, the electrode assembly may be in a shape of a cylinder, a flat shape, or a polygon prism.

In some implementations, the electrode assembly is provided with an electrode tab, and the electrode tab may output a current from the electrode assembly. The electrode tab includes a positive electrode tab and a negative electrode tab.

In some implementations, the battery cell may include a housing. The housing is configured to package components such as the electrode assembly and the electrolyte. The housing may be a steel housing, an aluminum housing, a plastic housing (for example, polypropylene), a composite metal housing (for example, a copper-aluminum composite housing), an aluminum-plastic film, or the like. The housing includes a shell and a cover plate.

By way of example, the battery cell may be a cylindrical battery cell, a prismatic battery cell, a soft pack battery cell, or a battery cell in another shape. The prismatic battery cell includes a square-housing battery cell, a blade-shaped battery cell, or a polygon prismatic battery. The polygon prismatic battery is, for example, a hexagonal prismatic battery. This is not particularly limited in the present application.

A battery mentioned in an embodiment of the present application may include one or more battery cells, to provide a single physical module with a higher voltage and capacity. When a plurality of battery cells are provided, the plurality of battery cells are connected in series, in parallel, or in series-parallel through a bus component.

In some embodiments, a battery may be a battery module. When there are a plurality of battery cells, the plurality of battery cells are arranged and fixed to form a battery module.

In some embodiments, the battery may be a battery pack. The battery pack includes a box and the battery cells, where the battery cells or the battery module are accommodated in the box.

In some embodiments, the box may be used as a part of a chassis structure of a vehicle. For example, a part of the box may become at least a part of the chassis of the vehicle, or a part of the box may become at least a part of a cross beam and a longitudinal beam of the vehicle.

Currently, when an internal short circuit or an external short circuit occurs in the battery cell due to reasons such as mechanical external force, thermal runaway occurs in the battery cell. A large amount of thermal runaway gas is instantly generated inside the battery cell. The generated gas needs to pass through the electrode assembly and mechanical components thereof inside the battery cell to reach the pressure relief mechanism, and open the pressure relief mechanism through an internal and external pressure difference, thereby implementing directional pressure relief.

However, as energy density of the battery cell continuously increases, a thermal runaway rate of the battery cell continuously increases, and a gas generation rate and a gas generation amount significantly increase. Under current design of the battery cell, non-directional pressure relief may occur in a thermal runaway process. For example, the exhaust channel in the battery cell that runs through the pressure relief mechanism is blocked, causing a shell to be broken, and a pressure of the gas is released from the broken place. The phenomenon may cause a secondary disaster of verification at a system level. For example, heat diffusion is caused because adjacent battery cells are subject to an impact, and high-voltage sparking is caused because the high-voltage wire harness is subject to an impact.

In view of this, an embodiment of the present application provides a battery cell. The support structure is disposed between the first wall provided with the pressure relief mechanism and the electrode assembly, and the support structure is fixed on the first wall, so that the support structure can form, between the first wall and the electrode assembly, the exhaust channel configured to guide the thermal runaway gas to the pressure relief mechanism. In this way, the thermal runaway gas can be vented to the outside of the battery cell in a timely manner through the pressure relief mechanism, thereby reducing the possibility that the non-directional pressure relief occurs in the battery cell.

The technical solutions described in the embodiments of the present application are all applicable to various devices using a battery, such as mobile phones, portable devices, laptops, battery cars, electric toys, electric tools, electric vehicles, ships and spacecraft. For example, the spacecrafts include airplanes, rockets, space shuttles, and space vehicles.

It should be understood that, the technical solutions described in the embodiments of the present application are not only applicable to the foregoing devices, but also applicable to all devices using batteries. However, for the sake of brevity, in the following embodiments, electric vehicles are used as an example for description.

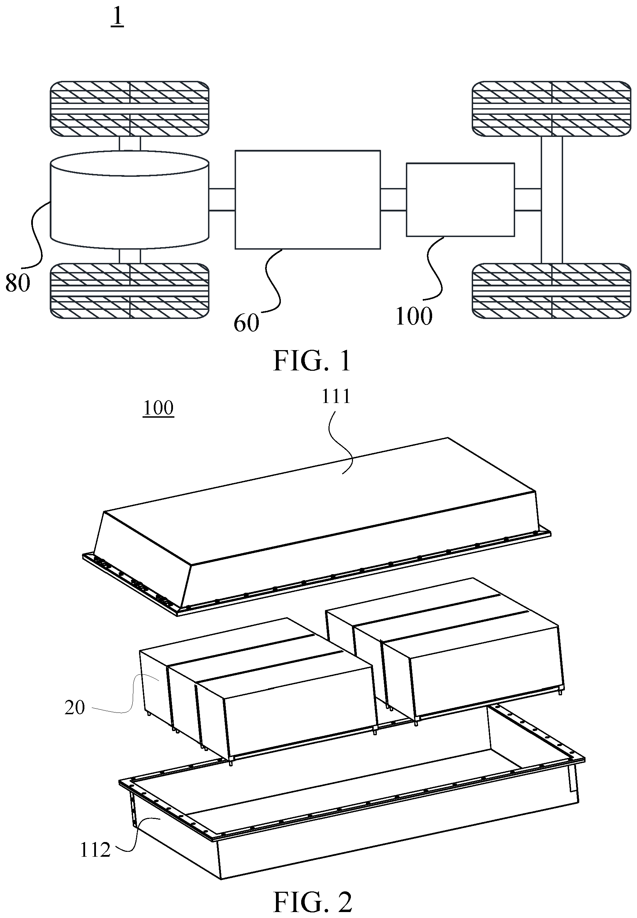

For example, FIG. 1 is a schematic diagram of a structure of a vehicle 1 according to an embodiment of the present application. The vehicle 1 may be a fuel vehicle, a gas vehicle or a new-energy vehicle. The new-energy vehicle may be a battery electric vehicle, a hybrid vehicle or an extended-range vehicle, or the like. The vehicle 1 may be internally provided with a motor 80, a controller 60, and a battery 100, and the controller 60 is configured to control the battery 100 to supply power to the motor 80. For example, the battery 100 may be disposed at the bottom, head, or tail of the vehicle 1. The battery 100 may be configured for power supply of the vehicle 1. For example, the battery 100 may serve as an operation power source of the vehicle 1 for a circuit system of the vehicle 1, for example, for a working power demand of the vehicle 1 during startup, navigation and running. In another embodiment of the present application, the battery 100 may be configured not only as an operation power supply of the vehicle 1, but also as a driving power supply of the vehicle 1, replacing or partially replacing fuel or natural gas to provide driving power for the vehicle 1.

For example, FIG. 2 is a schematic diagram of a structure of a battery 100 according to an embodiment of the present application. The battery 100 may include a plurality of battery cells 20. In addition to the battery cells 20, the battery 100 may further include a box. The box has a hollow structure, and the plurality of battery cells 20 can be accommodated in the box. As shown in FIG. 2, the box may include two portions, which are respectively referred to as a first box portion 111 and a second box portion 112, and the first box portion 111 and the second box portion 112 are fastened together. Shapes of the first box portion 111 and the second box portion 112 may be determined according to a combined shape of the plurality of battery cells 20, and at least one of the first box portion 111 and the second box portion 112 has an opening. For example, as shown in FIG. 2, only one of the first box portion 111 and the second box portion 112 is a hollow cuboid having an opening, and the other one of the first box portion 111 and the second box portion 112 is in a shape of a plate, to cover the opening. An example in which the second box portion 112 is the hollow cuboid, only one surface is an opening surface, and the first box portion 111 is in a shape of a plate is used herein. The first box portion 111 covers at the opening of the second box portion 112 to form a box 11 having a closed cavity. The cavity may be configured to accommodate the plurality of battery cells 20. After being combined in parallel or in series or in series-parallel, the plurality of battery cells 20 are disposed in the box formed by fastening the first box portion 111 and the second box portion 112.

For another example, different from FIG. 2, both the first box portion 111 and the second box portion 112 may be hollow cuboids with only one surface being an opening surface. An opening of the first box portion 111 and an opening of the second box body 112 are oppositely provided, and the first box portion 111 and the second box portion 112 are fastened with each other to form the box having the closed cavity. After being combined in parallel or in series or in series-parallel, the plurality of battery cells 20 are disposed in the box formed by fastening the first box portion 111 and the second box portion 112.

In some embodiments, the battery 100 may further include other structures. Details are not described herein again. For example, the battery 100 may further include a bus component (not shown in the figure). The bus component is configured to implement electrical connections between the plurality of battery cells 20. Specifically, the bus component may implement the electrical connections between the battery cells 20 by connecting the electrode terminals of the battery cells 20. In some embodiments, the bus component may be fixed to the electrode terminal of the battery cell 20 through soldering. Electric energy of the plurality of battery cells 20 can be further led out through an electrically conductive mechanism passing through the box. In some embodiments, the electrically conductive mechanism may also belong to the bus component.

To meet different power requirements, a quantity of battery cells 20 may be more than one. The plurality of battery cells may be in series connection, parallel connection, or series-parallel connection. The series-parallel connection refers to a combination of series connection and parallel connection. The battery 100 may also be referred to as a battery pack. In some embodiments, the plurality of battery cells may be first connected in series or in parallel or in series-parallel to form battery modules, and then a plurality of battery modules are connected in series or in parallel or in series-parallel to form the battery 100. In other words, the plurality of battery cells can directly form the battery 100, or the battery module can be formed first, and then the battery module forms the battery 100.

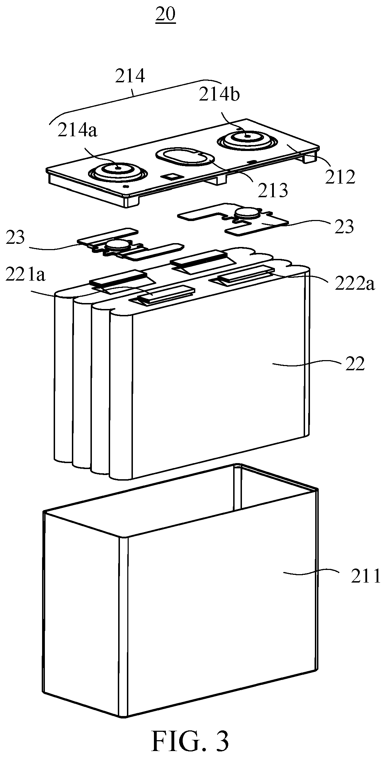

FIG. 3 is a schematic exploded diagram of a battery cell 20 according to an embodiment of the present application.

As shown in FIG. 3, the battery cell 20 includes one or more electrode assemblies 22, a shell 211, and a cover plate 212. Both a wall of the shell 211 and the cover plate 212 are referred to as a wall of the battery cell 20. The shell 211 is shaped according to a shape of one or more electrode assemblies 22 after combination. For example, the shell 211 may be a hollow cuboid or cube or cylinder, and one surface of the shell 211 has an opening such that one or more electrode assemblies 22 can be placed in the shell 211. For example, when the shell 211 is a hollow cuboid or cube, one plane of the shell 211 is an opening surface, that is, the plane does not have a wall, so that the inside and outside of the shell 211 are in communication with each other. When the shell 211 is a hollow cylinder, an end surface of the shell 211 is an opening surface, that is, the end surface does not have a wall, so that the inside and outside of the shell 211 are in communication with each other. The cover plate 212 covers the opening and is connected to the housing 211 to form a closed cavity in which the electrode assembly 22 is placed. The shell 211 is filled with an electrolyte, such as an electrolytic solution.

The battery cell 20 further includes two electrode terminals 214. The cover plate 212 is generally in the shape of a flat plate, and the two electrode terminals 214 are fixed on a flat plate surface of the cover plate 212. The two electrode terminals 214 are a positive electrode terminal 214a and a negative electrode terminal 214b, respectively. Each electrode terminal 214 is correspondingly provided with a connecting member 23 also referred to as a current collecting member, which is located between the cover plate 212 and the electrode assembly 22 and configured to electrically connect the electrode assembly 22 to the electrode terminal 214.

As shown in FIG. 3, each electrode assembly 22 includes a first electrode tab 221a and a second electrode tab 222a. The first electrode tab 221a and the second electrode tab 222a have opposite polarities. For example, when the first electrode tab 221a is a positive electrode tab, the second electrode tab 222a is a negative electrode tab. The first electrode tab 221a of one or more electrode assemblies 22 is connected to one electrode terminal 214 via one connecting member 23, and the second electrode tab 222a of one or more electrode assemblies 22 is connected to the other electrode terminal 214 via the other connecting member 23. For example, the first electrode tab 221a is the positive electrode tab, and the second electrode tab 222a is the negative electrode tab. The positive electrode terminal 214a is connected to the first electrode tab 221a via one connecting member 23, and the negative electrode terminal 214b is connected to the second electrode tab 222a via the other connecting member 23.

In the battery cell 20, according to actual usage requirements, there may be a single or a plurality of electrode assemblies 22. As shown in FIG. 3, there are four separate electrode assemblies 22 in the battery cell 20.

By way of example, a pressure relief mechanism 213 may be further disposed on a wall of the battery cell 20. The pressure relief mechanism 213 is configured to be actuated when an internal pressure or temperature of the battery cell 20 reaches a threshold, to relieve the internal pressure or heat.

Optionally, the pressure relief mechanism 213 may be disposed on the cover plate 212, or may be disposed on any wall of the shell 211.

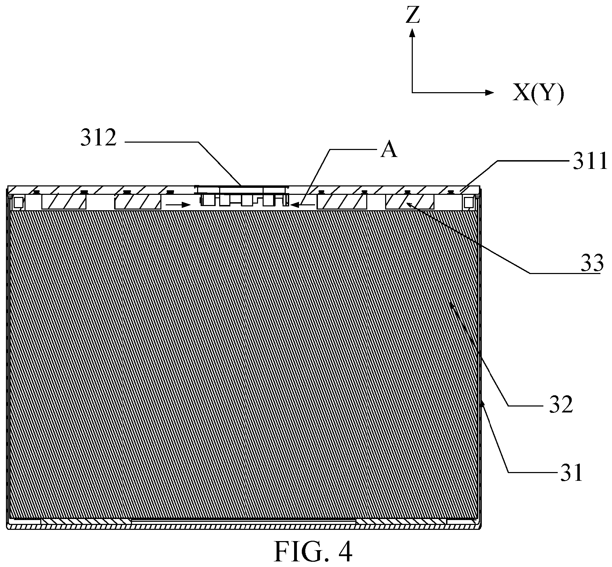

FIG. 4 is a plane cross-sectional view of a battery cell 30 according to an embodiment of the present application.

As shown in FIG. 4, the battery cell 30 includes: a housing 31, including a first wall 311, where the first wall 311 is provided with a pressure relief mechanism 312; an electrode assembly 32, accommodated in the housing 31; and a support structure 33, disposed between the first wall 311 and the electrode assembly 32, where the support structure 33 is fixedly connected to the first wall 311, the support structure 33 is used for forming, between the first wall 311 and the electrode assembly 32, an exhaust channel A in communication with the pressure relief mechanism 312.

It should be noted that, the housing 31 may include the shell 211 and the cover plate 212 that are shown in FIG. 3. The first wall 311 may be any wall of the shell 211, or may be the cover plate 212. In other words, the pressure relief mechanism 213 may be disposed on any wall of the battery cell 30.

The support structure 33 is disposed between the first wall 311 and the electrode assembly 32, and the support structure 33 is fixedly connected to the first wall 322. It may be understood as that, the support structure 33 is fixed on the surface of the first wall 311 that faces the electrode assembly 32. For example, as shown in FIG. 4, the support structure 33 is fixed on a lower surface of the first wall 311.

The support structure 33 is used for forming, between the first wall 311 and the electrode assembly 32, the exhaust channel A in communication with the pressure relief mechanism 312. Specifically, when thermal runaway occurs in the battery cell 30, the support structure 33 may enable the first wall 311 to be separated from the electrode assembly 32, and the exhaust channel A is formed between the first wall 311 and the electrode assembly 32. The exhaust channel A may guide thermal runaway gas to the pressure relief mechanism 312, so that the thermal runaway gas is vented from the pressure relief mechanism 312 to the outside of the battery cell 30.

In this embodiment, the support structure 33 is disposed between the first wall 311 and the electrode assembly 32, and the support structure 33 is fixed on the first wall 311, and is configured to form, between the first wall 311 and the electrode assembly 32, the exhaust channel A in communication with the pressure relief mechanism 312, so that when the thermal runaway occurs in the battery cell 30, a gap is provided between the first wall 311 and the electrode assembly 32, to accommodate the thermal runaway gas. In addition, because the pressure relief mechanism 312 is disposed on the first wall 311, the thermal runaway gas accumulated in the gap between the first wall 311 and the electrode assembly 32 can be vented from the pressure relief mechanism 312 to the outside of the battery cell 30, thereby reducing the possibility that the non-directional pressure relief occurs in the battery cell 30.

In some embodiments, the support structure 33 is used for supporting the electrode assembly 32.

In other words, the support structure 33 may restrict the electrode assembly 32 from moving toward the first wall 311.

For example, the support structure 33 is used for supporting the electrode assembly 32 when the thermal runaway occurs in the battery cell 30. For another example, the support structure 33 can support the electrode assembly 32 no matter whether the thermal runaway occurs in the battery cell 30. This is not limited in this embodiment of the present application.

In this embodiment, the support structure 33 is used for supporting the electrode assembly 32, so that when the thermal runaway occurs in the battery cell 30, the exhaust channel A in communication with the pressure relief mechanism 312 can still be formed between the first wall 311 and the electrode assembly 32, thereby improving the problem that the non-directional pressure relief occurs in the battery cell 30.

In some other embodiments, a melting point of the support structure 33 is higher than 100°C.

In an example, a material of the support structure 33 may be a single material. For example, the material of the support structure 33 is a single material such as an aluminum material or a copper material. In this case, the support structure 33 has a fixed melting point.

In another example, a material of the support structure 33 may be a composite material. For example, the support structure 33 may be a hybrid material of an aluminum material and a copper material. In this case, the support structure 33 does not have a fixed melting point, that is, the melting point of the support structure 33 is a melting point range of various materials. For example, if a melting point of the aluminum material is 660°C, and a melting point of copper is 1083°C, a melting point range of the support structure 33 is 660°C to 1083°C, and the melting point of the support structure 33 is higher than a melting point of the insulating member 34. It may be understood as that, a lowest melting point in the melting point range of the support structure 33 is higher than the melting point of the insulating member 34.

For example, when a positive electrode material of the battery cell is a compound having an olivine-type structure, the melting point of the support structure 33 may be higher than 150°C, so that the thermal runaway gas can smoothly reach the pressure relief mechanism 312 before a valve of the pressure relief mechanism 312 is opened. Further, optionally, the melting point of the support structure 33 is higher than 500°C, so that mechanical strength of the battery cell 30 can still be maintained in a thermal runaway process. The compound having an olivine-type structure may be selected from lithium iron phosphate, lithium iron manganese phosphate, or a mixture of lithium iron phosphate and lithium iron manganese phosphate.

For another example, when a positive electrode material of the battery cell includes a layered compound, the melting point of the support structure 33 may be higher than 100°C, so that the thermal runaway gas can smoothly reach the pressure relief mechanism 312 before a valve of the pressure relief mechanism 312 is opened. Further, optionally, the melting point of the support structure 33 is higher than 400°C, so that mechanical strength of the battery cell 30 can still be maintained in a thermal runaway process. The layered compound may be selected from a lithium nickel cobalt manganese oxygen ternary layered material, a mixture of lithium iron phosphate and a lithium nickel cobalt manganese oxygen ternary layered material, or a mixture of lithium manganese iron and a lithium nickel cobalt manganese oxygen ternary layered material.

Optionally, a material of the support structure 33 may be a high temperature resistant material. For example, the material of the support structure 33 may include at least one of hard materials such as metal, graphite, polytetrafluoroethylene, mica, or ceramic.

In this embodiment, the support structure 33 whose melting point is higher than 100°C is used, which helps the battery cell 30 not be easily melted when the thermal runaway occurs. Further, the exhaust channel A in communication with the pressure relief mechanism 312 can be formed between the first wall 311 and the electrode assembly 32, so that the thermal runaway gas can be vented to the outside of the battery cell 30 through the pressure relief mechanism 312 in a timely manner, thereby improving the problem that the non-directional pressure relief occurs in the battery cell 30.

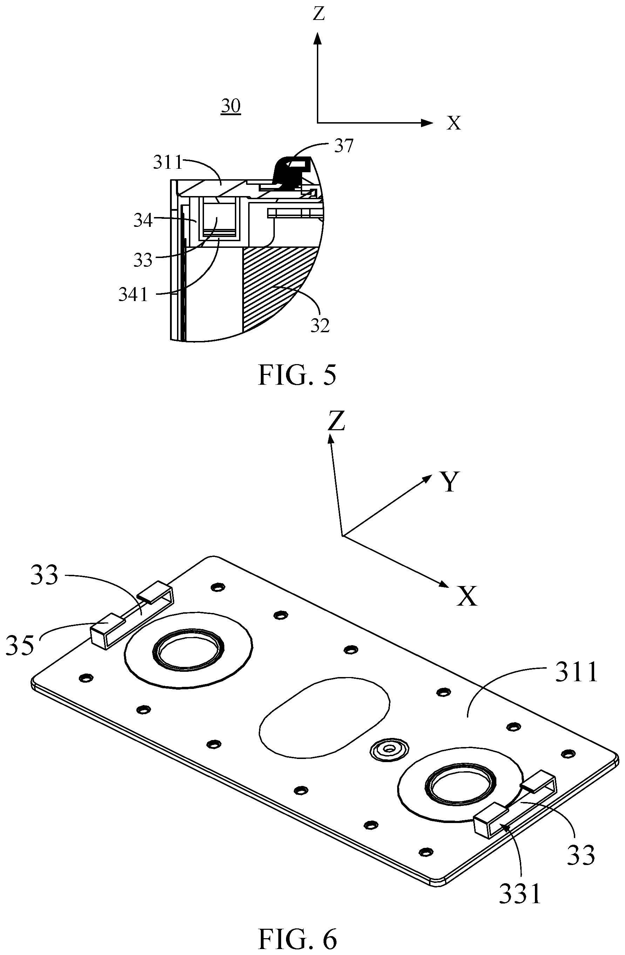

FIG. 5 is a partial cross-sectional view of a battery cell 30 according to another embodiment of the present application. As shown in FIG. 5, the battery cell 30 further includes an insulating member 34, disposed between the electrode assembly 32 and the first wall 311. The insulating member 34 is provided with an avoidance cavity 341, and the avoidance cavity 341 is configured to accommodate the support structure 33.

Generally, the insulating member 34 is disposed between the first wall 311 and the electrode assembly 32, and is configured to insulate the first wall 311 and the electrode assembly 32. Optionally, a material of the insulating member 34 may include a polypropylene (PP) material, a polyphenylene sulfide (PPS) material, or a soluble polytetrafluoroethylene (PFA) material.

Optionally, the insulating member 34 may be provided with an avoidance cavity 341 whose opening faces the first wall 311, so that the support structure 33 fixed on a surface of the first wall 311 that faces the electrode assembly 32 is accommodated in the avoidance cavity 341.

In this embodiment, the avoidance cavity 341 is provided on the insulating member 34 to accommodate the support structure 33, so that when insulation between the first wall 311 and the electrode assembly 32 is not affected, a space of the battery cell 30 does not need to be additionally occupied in the thickness direction Z of the first wall 311, thereby improving energy density of the battery cell 30.

Optionally, a melting point of the support structure 33 is higher than a melting point of the insulating member 34.

Generally, in a late stage of the thermal runaway, the insulating member 34 may be melted, which may cause the electrode assembly 32 to move toward the first wall 311, or even to abut against the first wall 311. Therefore, the exhaust channel through which the thermal runaway gas reaches the pressure relief mechanism 312 is blocked. In this embodiment, the melting point of the support structure 33 is set to be higher than the melting point of the insulating member 34, so that in the late stage of the thermal runaway, the support structure 33 is not easily melted, and the exhaust channel A for the thermal runaway gas to reach the pressure relief mechanism 312 can be provided, thereby reducing the probability that the non-directional pressure relief occurs in the battery cell 30.

Optionally, a material of the support structure 33 is the same as a material of the first wall 311.

It should be noted that, the support structure 33 may include a plurality of materials. For example, a main structure of the support structure 33 is a metal material, and an outer surface of the support structure 33 is wrapped with an insulating material. Similarly, the first wall 311 may also include a plurality of materials. For example, a main structure of the first wall 311 is made of a metal material. Some components formed by an insulating material may be further disposed on the first wall 311. In this case, the material of the support structure 33 in the embodiments of the present application is the same as the material of the first wall 311, which actually means that a material of the main structure of the support structure 33 is the same as a material of the main structure of the first wall 311. In addition, if the material of the main structure of the support structure 33 and the material of the main structure of the first wall 311 are the same and are composite materials, it may be considered that material types included in the main structure of the support structure 33 and the main structure of the first wall 311 are the same, and material ratios may be different.

In some embodiments, the material of the first wall 311 is an aluminum material, and the material of the support structure 33 may also be the aluminum material.

In this embodiment, the material of the support structure 33 is set to be the same as the material of the first wall 311, so that workability of fixing the support structure 33 on the first wall 311 can be improved.

In an example, the material of the support structure 33 is the metal material, and the support structure 33 may be fixedly connected to the first wall 311 in a manner of soldering.

In this embodiment, the support structure 33 is fixedly connected to the first wall 311 in a manner of soldering, so that binding strength between the support structure 33 and the first wall 311 can be strengthened.

Optionally, the support structure 33 may be further fixedly connected to the first wall 311 in a manner of riveting and the like.

In some other embodiments, the material of the support structure 33 may be further different from the material of the first wall 311. For example, the material of the support structure 33 may include at least one of non-metal materials such as a graphite material, a polytetrafluoroethylene material, mica, or ceramic. In this embodiment, the support structure 33 may be fixedly connected to the first wall 311 in a manner of bonding or snapping.

In some other embodiments, the support structure 33 and the first wall 311 may be further integrally formed.

In this embodiment, the support structure 33 and the first wall 311 are integrally formed, so that the binding strength between the first wall 311 and the support structure 33 can be improved, shaking of the support structure 33 inside the battery cell 30 can be reduced, and the probability that the support structure 33 blocks the pressure relief mechanism 312 is reduced.

FIG. 6 is a schematic diagram of a connection between a first wall 311 and a support structure 33 according to an embodiment of the present application.

As shown in FIG. 6, a surface of the support structure 33 that faces the electrode assembly 32 is provided with an insulating layer 35.

It should be noted that, when the support structure 33 is the metal material, the surface of the support structure 33 needs to be provided with the insulating layer 35. However, when the support structure 33 is the insulating material, the surface of the support structure 33 does not need to be provided with the insulating layer 35.

In addition, when the support structure 33 is the metal material, the support structure 33 is accommodated in the avoidance cavity 341 of the insulating member 34, and the avoidance cavity 341 runs through the insulating member 34 in the thickness direction Z of the first wall 311, the surface of the support structure 33 that faces the electrode assembly 32 may be only provided with the insulating layer 35. However, when the support structure 33 is made of the metal material, the support structure 33 is accommodated in the avoidance cavity 341 of the insulating member 34, and the avoidance cavity 341 does not run through the insulating member 34 in the thickness direction Z of the first wall 311, the surface of the support structure 33 does not need to be provided with the insulating layer 35.

However, when the support structure 33 is made of the metal material and the support structure 33 is not surrounded by the insulating member 34, the insulating layer 35 may be disposed on all other surfaces of the support structure 33 other than the surface fixedly connected to the first wall 311.

In an example, an independent insulating layer 35 may be wrapped on the surface of the support structure 33.

In another example, an insulating material may also be coated on the surface of the support structure 33, to form the insulating layer 35.

In this embodiment, the surface of the support structure 33 that faces the electrode assembly 32 is provided with the insulating layer 35, so that a probability that the first wall 311 is electrically connected to the electrode assembly 32 can be reduced.

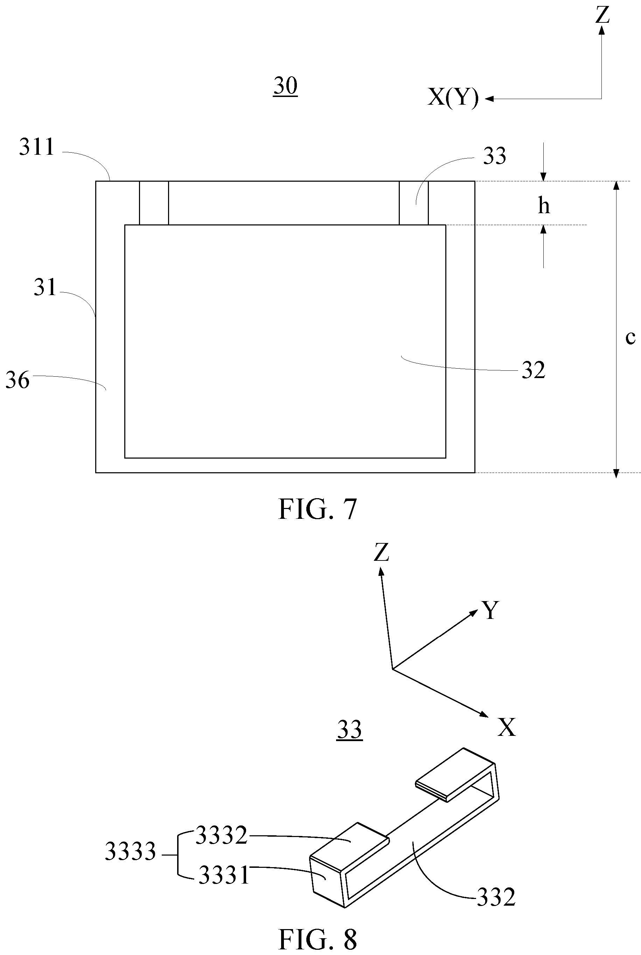

Optionally, as shown in FIG. 6 and FIG. 7, a gap 36 is provided between the housing 31 and the electrode assembly 32 in a first direction. The support structure 33 is provided with an empty cavity 331 that runs through along the first direction, the empty cavity 331 is configured to communicate the gap 36 with the pressure relief mechanism 312, and the first direction is perpendicular to a thickness direction Z of the first wall 311.

Optionally, the first direction may be a length direction X of the first wall 311, or may be a width direction Y of the first wall 311.

In an example, in the first direction, the support structure 33 may be disposed between the gap 36 and the pressure relief mechanism 312.

In this embodiment, the support structure 33 is provided with the empty cavity 331 that runs through along the first direction, and the empty cavity 331 is configured to communicate the gap 36 with the pressure relief mechanism 312, to guide the thermal runaway gas accumulated in the gap 36 to the pressure relief mechanism 312, thereby reducing the possibility that the thermal runaway gas accumulated in the gap 36 cannot be vented in a timely manner and consequently the housing 31 is burst. In addition, the empty cavity 331 is provided in the support structure 33, so that an effect of reducing a weight and improving energy density can be further implemented.

In another embodiment, the support structure 33 may not have the empty cavity 331, that is, the support structure 33 is a solid structure, provided that the support structure 33 can function to support the electrode assembly 32 when the thermal runaway occurs in the battery cell 30.

Optionally, the support structure 33 may also be formed by a plurality of support blocks disposed at an interval along the second direction, where an interval between every two adjacent support blocks may form the empty cavity 331, that is, can function as the empty cavity 331.

The first direction may be a length direction X of the first wall 311, and the second direction is a width direction Y of the first wall 311. Alternatively, the first direction may be a width direction Y of the first wall 311, and the second direction is a length direction of the first wall 311.

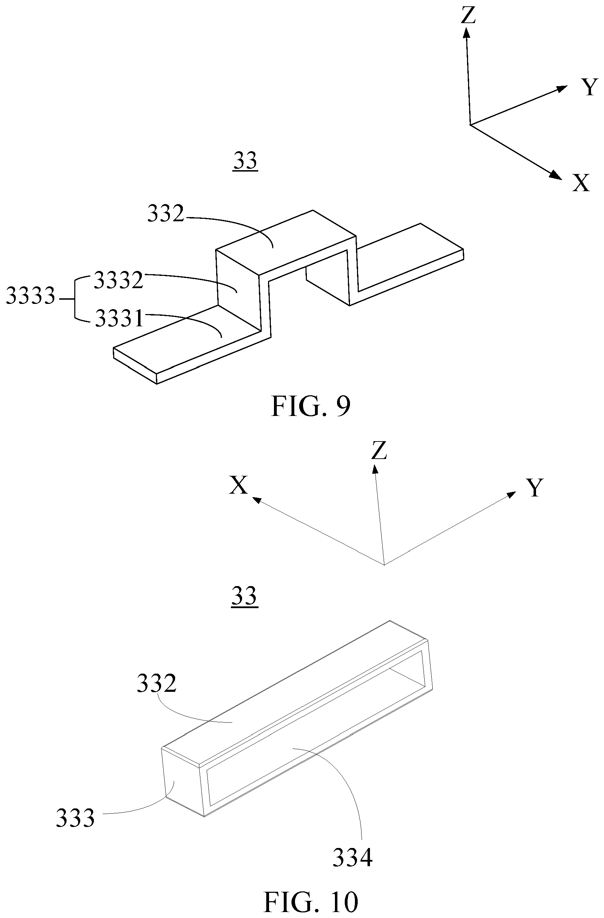

FIG. 8 is a schematic diagram of a structure of a support structure 33 according to an embodiment of the present application. FIG. 9 is a schematic diagram of a structure of a support structure 33 according to another embodiment of the present application. FIG. 10 is a schematic diagram of a structure of a support structure according to still another embodiment of the present application.

Optionally, the support structure 33 includes a first connecting wall 332 and at least one support wall 333 that are connected, the first connecting wall 332 is parallel to the first wall 311, the first connecting wall 332 is fixedly connected to the first wall 311, and the support wall 333 is perpendicular to the first connecting wall 332.

In this embodiment, the support structure 33 formed by the first connecting wall 332 fixedly connected to the first wall 311 and the at least one support wall 333 perpendicular to the first connecting wall 332 is used, so that the weight of the battery cell 30 can be reduced, and the energy density of the battery cell 30 can be improved.

In some embodiments, the support wall 333 may be perpendicular to the first direction. For example, the support structure 33 includes the first connecting wall 332 and the support wall 333. The first connecting wall 332 and the support wall 333 may be L-shaped, and a through hole is provided on the support wall 333, to form the empty cavity 331.

In some other embodiments, as shown in FIG. 8 to FIG. 10, the at least one support wall 333 includes two support walls 333 that are disposed opposite to each other along a second direction, the second direction is perpendicular to the thickness direction Z of the first wall 311, and the second direction is perpendicular to the first direction.

In this embodiment, the two support walls 333 that are disposed opposite to each other along the second direction and the first connecting wall 332 form the empty cavity 331 that runs through along the first direction, so that support strength can be enhanced, and a venting cross-sectional area can be enlarged as much as possible, thereby improving a venting rate of the thermal runaway gas.

As shown in FIG. 8 and FIG. 9, the two support walls 333 are separately connected to two ends of the first connecting wall 332 along the second direction, the support wall 333 includes a first part 3331 that is perpendicular to the second direction and a second part 3332 that is parallel to the first connecting wall 332, the first part 3331 is connected to the first connecting wall 332, and two second parts 3332 of the two support walls 333 are spaced apart along the second direction.

In this embodiment, the support wall 333 not only includes the first part 3331 perpendicular to the second direction, but also includes the second part 3332 parallel to the first connecting wall 332, and the two second parts 3332 of the support structure 33 are spaced apart along the second direction, which can enhance strength of the support structure 33.

In some embodiments, joints between the two support walls 333 and the first connecting wall 332 may not be located at the two ends of the first connecting wall 332 along the second direction. That is, there is a specific distance between the joints between the two support walls 333 and the first connecting wall 332 and the two ends of the first connecting wall 332 along the second direction.

In some other embodiments, the support wall 333 may include only the first part 3331, but not the second part 3332.

As shown in FIG. 8, in the thickness direction Z of the first wall 311, a projection of the second part 3332 on the first wall 311 is located inside a projection of the first connecting wall 332 on the first wall 311.

In this embodiment, the two support walls 333 are separately connected to two ends of the first connecting wall 332 along the second direction, and in the thickness direction Z of the first wall 311, the projection of the second part 3332 on the first wall 311 is located inside the projection of the first connecting wall 332 on the first wall 311, so that the venting cross-sectional area of the support structure 33 can be enlarged more effectively.

As shown in FIG. 9, in the thickness direction Z of the first wall 311, a projection of the second part 3332 on the first wall 311 is located outside a projection of the first connecting wall 332 on the first wall 311.

In this embodiment, the two support walls 333 are separately connected to two ends of the first connecting wall 332 along the second direction, and in the thickness direction Z of the first wall 311, the projection of the second part 3332 on the first wall 311 is located outside the projection of the first connecting wall 332 on the first wall 311, so that the support structure 33 is obtained by being bent, and manufacturability of the support structure 33 is higher.

As shown in FIG. 10, the support structure 33 further includes a second connecting wall 334, the first connecting wall 332 and the second connecting wall 334 are disposed opposite to each other along the thickness direction of the first wall 311, and the first connecting wall 332, the two support walls 333, and the second connecting wall 334 are connected end to end, to form the empty cavity 331.

In other words, the first connecting wall 332 and the second connecting wall 334 are disposed opposite to each other along the thickness direction Z of the first wall 311, and the two support walls 333 are disposed opposite to each other along the second direction. The first connecting wall 332, the two support walls 333, and the second connecting wall 334 are connected end to end, so that the empty cavity 331 whose cross section is in a shape of a square may be formed.

In this embodiment, the support structure 33 is formed by the first connecting wall 332, the two support walls 333, and the second connecting wall 334 that are connected end to end, so that support strength of the support structure 33 for the electrode assembly 32 can be improved.

As shown in FIG. 7, the support structure 33 is disposed in an end region of the battery cell 30 along the first direction, and the first direction is perpendicular to the thickness direction Z of the first wall 311.

Generally, when the thermal runaway occurs in the battery cell 30, in comparison to the middle region of the first wall 311, the end of the first wall 311 is more likely to abut against the electrode assembly 32. The support structure 33 is disposed in the end region of the battery cell 30 in the first direction, so that a possibility that an end of the first wall 311 in the first direction abuts against the electrode assembly 32 can be reduced as much as possible. In this way, the thermal runaway gas inside the battery cell 30 can reach the pressure relief mechanism 312, thereby reducing the possibility that the non-directional pressure relief occurs in the battery cell 30.

Optionally, if the battery cell 30 is a square-shaped battery cell, the support structure 33 may be disposed at two ends of the first wall 311 along the length direction X, and/or disposed at two ends of the first wall 311 along the width direction Y.

Optionally, if the battery cell 30 is a cylinder-shaped battery cell, the support structures 33 may be spaced apart at the end of the first wall 311 along a circumferential direction of the first wall 311.

Optionally, as shown in FIG. 7, in the first direction, the pressure relief mechanism 312 is disposed between the two support structures 33.

In this embodiment, in the first direction, the pressure relief mechanism 312 is disposed between the two support structures 33, which can reduce the possibility that the end of the first wall 311 abuts against the electrode assembly as much as possible, so that the thermal runaway gas in two side cavities of the battery cell 30 in the first direction can be vented to the pressure relief mechanism 312 through the corresponding support structures 33, thereby further reducing the possibility that the non-directional pressure relief occurs in the battery cell 30.

In an example, as shown in FIG. 6, the support structure 33 is disposed in a middle region of the end region in the second direction.

In this embodiment, the support structure 33 is disposed in the middle region of the end region in the second direction, so that when deformation of the housing 31 is severe, the thermal runaway gas accumulated in the side cavities of the battery cell 30 in the first direction can be vented to the pressure relief mechanism 312 as much as possible, thereby reducing the possibility that the non-directional pressure relief occurs in the battery cell 30.

In another example, the support structure 33 is disposed in an edge region of the end region in the second direction.

In this embodiment, the support structure 33 is disposed in the edge region of the end region in the second direction, so that when deformation of the housing 31 is not severe, the thermal runaway gas accumulated in the side cavities of the battery cell 30 in the first direction can be vented to the pressure relief mechanism 312 as much as possible, thereby reducing the possibility that the non-directional pressure relief occurs in the battery cell 30.

In an embodiment, the support structure 33 may span the entire electrode assembly 32 in the second direction.

In another embodiment, the support structure 33 may be disposed only at four corners of the first wall 311.

Optionally, as shown in FIG. 7, in the thickness direction Z of the first wall 311, a size h of the support structure 33 and a size c of the battery cell satisfy: 0.003≤h/c≤0.13.

In this embodiment, if h/c is less than 0.003, blocking easily occurs due to particles or plates generated due to runaway inside the battery cell 30, and consequently, the purpose of forming the exhaust channel A cannot be achieved. However, when h/c is greater than 0.13, the energy density of the battery cell 30 is seriously sacrificed. When h/c is set between 0.003 and 0.13, the energy density of the battery cell 30 can be balanced and the exhaust channel A is formed between the first wall 311 and the electrode assembly 32.

A technical effect achieved by 0.003≤h/c≤0.13 is described in detail below with reference to specific embodiments.

Specifically, a size of the shell of the battery cell is 44 mm*220 mm*100 mm (width*length*height), and the energy density is 250 Wh/kg. An end cover (for example, a first wall) having a support structure is manufactured by machining. The end cover has a pressure relief mechanism. The support structure is two regular quadrangular prisms that are symmetrically distributed, are respectively located at two ends of a short side of the end cover, have a length of 41 mm, and are respectively 0.5 mm away from a long side of the end cover. A distance between the support structure and the short side of the end cover is 7 mm. Support structures of different heights are separately manufactured. Then, the battery cell is triggered to run away through a built-in heating film, and a condition of directional pressure relief of the battery cell is observed. A valve opening pressure of the pressure relief mechanism is 1.0 Mpa, and weld strength of the end cover is 1.5 Mpa. In addition, an internal air pressure condition of the battery cell is detected through the end cover and a vent tube on a side surface. Data is shown in Table 1.

**Table 1**

| h (mm) | h/c | Maximum pressure (MPa) below an end cover | Maximum pressure (MPa) on a side surface | Results of tests |
|---|---|---|---|---|
| 0.1 | 0.001 | 1.03 | 1.62 | Weld on a side surface fails |
| 0.2 | 0.002 | 1.12 | 1.56 | Weld on a side surface fails |
| 0.3 | 0.003 | 1.05 | 1.34 | A pressure relief mechanism is normally opened and a shell is intact |
| 1 | 0.01 | 1.12 | 1.24 | The pressure relief mechanism is normally opened and the shell is intact |
| 2 | 0.02 | 1.05 | 1.3 | The pressure relief mechanism is normally opened and the shell is intact |
| 5 | 0.05 | 1.09 | 1.32 | The pressure relief mechanism is normally opened and the shell is intact |
| 10 | 0.1 | 1.11 | 1.26 | The pressure relief mechanism is normally opened and the shell is intact |
| 13 | 0.13 | 1.12 | 1.12 | The pressure relief mechanism is normally opened and the shell is intact |
| 13.5 | 0.135 | 1.08 | 1.02 | The pressure relief mechanism is normally opened and the shell is intact, but energy density loss is severe. |

It can be learned from Table 1 that, when h/c is equal to 0.001 and 0.002, the weld on the side surface of the shell fails; when h/c is equal to 0.135, the pressure relief mechanism is normally opened and the shell is intact, but the energy density loss is severe; however, when h/c is equal to 0.003, 0.01, 0.02, 0.05, 0.1, and 0.13, the pressure relief mechanism is normally opened and the shell is intact.

Further, optionally, 0.03≤h/c≤0.08.

Optionally, as shown in FIG. 10, a plurality of support structures 33 are disposed between the first wall 311 and the electrode assembly 32, and in the thickness direction Z of the first wall 311, a total projection area S1 of the plurality of support structures 33 on the first wall 311 and an area S of the first wall satisfy: 0.012≤S1/S≤0.26.

In this embodiment, when S1/S is less than 0.012, and when the thermal runaway occurs in the battery cell 30, a contact area between the support structure 33 and the first wall 311 is excessively small. Sufficient mechanical support cannot be provided for the electrode assembly 32. This may cause a case in which the internal electrode assembly 32 shakes or overlaps with the first wall 311, and even further worsens a venting path. However, when S1/S is greater than 0.26, the weight of the battery cell is increased, and the energy density is sacrificed. In addition, due to occupation of the inside of the battery cell 30 by the support structure 33, the free space is further reduced, which is not beneficial to directional pressure relief. S1/S is set between 0.012 and 0.26, so that the energy density of the battery cell 30 can be balanced and the exhaust channel A is formed between the first wall 311 and the electrode assembly 32.

A technical effect achieved by 0.012≤S1/S≤0.26 is described in detail below with reference to specific embodiments.

Specifically, a size of the shell of the battery cell is 44 mm*220 mm*100 mm (width*length*height), and the energy density is 250 Wh/kg. An end cover (for example, a first wall) having a support structure is manufactured by machining. The end cover has a pressure relief mechanism. The support structure is two regular quadrangular prisms that are symmetrically distributed, are respectively located at two ends of a short side of the end cover, have a length of 41 mm, and have a height of 1 mm. A width is used as a variable to adjust S1. Then, the battery cell is triggered to run away through a built-in heating film, and a condition of directional pressure relief of the battery cell is observed. A valve opening pressure of the pressure relief mechanism is 1.0 Mpa, and weld strength of the end cover is 1.5 Mpa. In addition, an internal air pressure condition of the battery cell is detected through the end cover and a vent tube on a side surface. Data is shown in Table 2.

**Table 2**

| S1 (mm²) | S (mm²) | S1/S | Maximum pressure (MPa) below a top cover | Maximum pressure (MPa) on a side surface | Results of tests |
|---|---|---|---|---|---|
| 41 | 9680 | 0.0042 | 1.53 | 1.24 | Weld on an end cover fails |
| 82 | | 0.0085 | 1.42 | 1.21 | Weld on a side surface fails |
| 116 | | 0.012 | 1.25 | 1.34 | A pressure relief mechanism is normally opened and a shell is intact |
| 123 | | 0.013 | 1.12 | 1.14 | The pressure relief mechanism is normally opened and the shell is intact |
| 200 | | 0.021 | 1.15 | 1.31 | The pressure relief mechanism is normally opened and the shell is intact |
| 500 | | 0.053 | 1.04 | 1.22 | The pressure relief mechanism is normally opened and the shell is intact |
| 1000 | | 0.11 | 1.31 | 1.36 | The pressure relief mechanism is normally opened and the shell is intact |
| 2000 | | 0.22 | 1.32 | 1.42 | The pressure relief mechanism is normally opened and the shell is intact |
| 2500 | | 0.26 | 1.36 | 1.28 | The pressure relief mechanism is normally opened and the shell is intact |
| 2900 | | 0.30 | 1.42 | 1.62 | Weld on a side surface fails |
| 3000 | | 0.31 | 1.44 | 1.57 | Weld on a side surface fails |

It can be learnt from Table 2 that, when S1/S is equal to 0.0042, the weld on the end cover fails; when S1/S is equal to 0.0085, the weld on the side surface fails; when S1/S is equal to 0.3 and 0.31, the weld on the side surface fails; however, when S1/S is equal to 0.012, 0.013, 0.021, 0.053, 0.11, 0.22, and 0.26, the pressure relief mechanism is normally opened and the shell is intact.

Further, optionally, 0.08≤S1/S≤0.2.

Optionally, as shown in FIG. 5, the battery cell 30 further includes an electrode terminal 37, disposed on a first wall 311, where the electrode terminal 37 is electrically connected to the electrode assembly 32.

In this embodiment, an electrical connection can be implemented to another battery cell through an electrical connection between the electrode terminal 37 of the first wall 311 and the electrode assembly 32, to expand a capacity of the battery.

Optionally, in some embodiments, the electrode terminal 37 may be disposed on a side of the first wall 311 that is away from the electrode assembly 32, to reduce occupation of an internal space of the battery cell 30, thereby improving the energy density of the battery cell 30.

Optionally, the battery cell 30 may be a square-shaped battery cell, or a cylinder-shaped battery cell. A shape of the battery cell 30 is not limited in the embodiments of this application.

Referring to FIG. 4 to FIG. 10 again, the battery cell 30 includes: a housing 31, including a first wall 311, where the first wall 311 is provided with an electrode terminal 37 and a pressure relief mechanism 312; an electrode assembly 32, accommodated in the housing 31, where the electrode terminal 37 is disposed on a side of the first wall 311 away from the electrode assembly 32; a support structure 33, disposed between the electrode assembly 32 and the first wall 311 and fixedly connected to the first wall 311; and an insulating member 34, disposed between the first wall 311 and the electrode assembly 32, where the insulating member 34 is provided with an avoidance cavity 341, the avoidance cavity 341 is configured to accommodate the support structure 33, a melting point of the support structure 33 is higher than a melting point of the insulating member 34, and the support structure 33 is used for supporting the electrode assembly 32 when thermal runaway occurs in the battery cell 30. A gap 36 is provided between the housing 31 and the electrode assembly 32 in the first direction, the support structure 33 is provided with an empty cavity 331 that runs through along the first direction, and the empty cavity 331 is configured to communicate the gap 36 with the pressure relief mechanism 312.

In this embodiment, the support structure 33 is disposed between the first wall 311 provided with the pressure relief mechanism 312 and the electrode assembly 32, and the support structure 33 is fixed on the first wall 311. The support structure 33 is provided with the empty cavity 331 that runs through along the first direction, to guide the thermal runaway gas accumulated in the gap 36 to the exhaust channel A, and vent the thermal runaway gas to the outside of the battery cell 30 through the pressure relief mechanism 312, thereby reducing the possibility that the non-directional pressure relief occurs in the battery cell 30.

Optionally, the battery cell 30 may further include another component, for example, the connecting member 23 shown in FIG. 3. For brevity, details are not described herein again.

An embodiment of the present application further provides a battery. The battery includes at least one battery cell 30 in the embodiments of the present application.

An embodiment of the present application further provides a power consuming apparatus, including the battery in the foregoing embodiments. The battery is configured to supply electric energy to the power consuming apparatus.

The power consuming apparatus may be the vehicle shown in FIG. 1, or may be any device in which the battery is used.

Although the present application has been described with reference to the preferred embodiments, various modifications may be made thereto and components thereof may be replaced with equivalents without departing from the scope of the present application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A battery cell, comprising:
a housing, comprising a first wall, wherein the first wall is provided with a pressure relief mechanism;
an electrode assembly, accommodated in the housing; and
a support structure, disposed between the electrode assembly and the first wall and fixedly connected to the first wall, wherein the support structure is used for forming, between the first wall and the electrode assembly, an exhaust channel in communication with the pressure relief mechanism.

2. The battery cell according to claim 1, wherein the support structure is used for supporting the electrode assembly.

3. The battery cell according to claim 1 or 2, wherein a melting point of the support structure is higher than 100°C.

4. The battery cell according to any one of claims 1 to 3, wherein the battery cell further comprises: an insulating member, disposed between the electrode assembly and the first wall, wherein the insulating member is provided with an avoidance cavity, and the avoidance cavity is configured to accommodate the support structure.

5. The battery cell according to any one of claims 1 to 4, wherein the battery cell further comprises the insulating member, the insulating member is configured to insulate the first wall and the electrode assembly, and the melting point of the support structure is higher than a melting point of the insulating member.

6. The battery cell according to any one of claims 1 to 5, wherein the support structure is fixedly connected to the first wall in a manner of soldering.

7. The battery cell according to any one of claims 1 to 6, wherein the support structure and the first wall are integrally formed.

8. The battery cell according to any one of claims 1 to 7, wherein a surface of the support structure that faces the electrode assembly is provided with an insulating layer.

9. The battery cell according to any one of claims 1 to 8, wherein a material of the support structure is the same as a material of the first wall.

10. The battery cell according to any one of claims 1 to 9, wherein a gap is provided between the housing and the electrode assembly in a first direction; and the support structure is provided with an empty cavity that runs through along the first direction, the empty cavity is configured to communicate the pressure relief mechanism with the gap, and the first direction is perpendicular to a thickness direction of the first wall.

11. The battery cell according to claim 10, wherein the support structure comprises a first connecting wall and at least one support wall that are connected, the first connecting wall is fixedly connected to the first wall, and the support wall is perpendicular to the first connecting wall.

12. The battery cell according to claim 11, wherein the at least one support wall comprises two support walls that are disposed opposite to each other along a second direction, the second direction is perpendicular to the thickness direction of the first wall, and the second direction is perpendicular to the first direction.

13. The battery cell according to claim 12, wherein the two support walls are separately connected to two ends of the first connecting wall along the second direction, the support wall comprises a first part that is perpendicular to the second direction and a second part that is parallel to the first connecting wall, the first part is connected to the first connecting wall, and two second parts of the two support walls are spaced apart along the second direction.

14. The battery cell according to claim 13, wherein in the thickness direction of the first wall, a projection of the second part on the first wall is located inside a projection of the first connecting wall on the first wall.

15. The battery cell according to claim 13, wherein in the thickness direction of the first wall, a projection of the second part on the first wall is located outside a projection of the first connecting wall on the first wall.

16. The battery cell according to claim 12, wherein the support structure further comprises a second connecting wall, the second connecting wall is disposed opposite to the first connecting wall along the thickness direction of the first wall, and the first connecting wall, the second connecting wall, and the two support walls are connected end to end, to form the empty cavity.

17. The battery cell according to any one of claims 1 to 16, wherein the support structure is disposed in an end region of the battery cell along the first direction.

18. The battery cell according to claim 17, wherein in the first direction, the pressure relief mechanism is disposed between the two support structures, and the first direction is perpendicular to the thickness direction of the first wall.

19. The battery cell according to claim 17 or 18, wherein the support structure is disposed in a middle region of the end region in the second direction, the second direction is perpendicular to the thickness direction of the first wall, and the second direction is perpendicular to the first direction.

20. The battery cell according to claim 17 or 18, wherein the support structure is disposed in an edge region of the end region in the second direction, the second direction is perpendicular to the thickness direction of the first wall, and the second direction is perpendicular to the first direction.

21. The battery cell according to any one of claims 1 to 20, wherein in the thickness direction of the first wall, a size h of the support structure and a size c of the battery cell satisfy: 0.003≤h/c≤0.13.

22. The battery cell according to any one of claims 1 to 21, wherein at least one support structure is disposed between the first wall and the electrode assembly, and in the thickness direction of the first wall, a total projection area S1 of the at least one support structure on the first wall and an area S of the first wall satisfy: 0.012≤S1/S≤0.26.

23. The battery cell according to any one of claims 1 to 22, wherein the first wall is an end cover.

24. The battery cell according to any one of claims 1 to 23, wherein the battery cell further comprises:
an electrode terminal, disposed on the first wall, wherein the electrode terminal is electrically connected to the electrode assembly.

25. A battery, comprising the battery cell according to any one of claims 1 to 24.

26. A power consuming apparatus, wherein the power consuming apparatus comprises the battery according to claim 25, and the battery is configured to supply electric energy to the power consuming apparatus.
